# EUROPEAN PATENT SPECIFICATION

(11) **EP 2 029 490 B1**
(45) Date of publication and mention of the grant of the patent: **23.05.2012**
(21) Application number: 07733056.1
(22) Date of filing: 04.06.2007
(51) Int. Cl.: C02F 1/42, C02F 1/469, B01J 39/00, B01J 47/00

(54) **WATER TREATMENT METHOD AND APPARATUS**
WASSERBEHANDLUNGSVERFAHREN UND -VORRICHTUNG
PROCEDE ET APPAREIL DE TRAITEMENT DE L'EAU

(30) Priority: 07.06.2006 GB 0611171
(43) Date of publication of application: 04.03.2009
(73) Proprietor: VWS (UK) Limited, Marlow Bucks SL7 1YL (GB)
(72) Inventor: MORTIMER, Alan Denton, Henley-On-Thames Oxon RG9 1QN (GB); EMERY, Nigel Philip, Princes Risborough Buckinghamshire HP27 9JW (GB); WHITEHEAD, Paul, Henley on Thames Oxon RG9 4HB (GB); WALKER, John Andrew, High Wycombe Buckinghamshire HP13 6LY (GB)
(74) Representative: Earnshaw, Geoffrey Mark
(86) International application number: PCT/GB2007/002040
(87) International publication number: WO 2007/141499

(56) References cited:
- GB-A- 779 178
- US-A- 3 240 724
- US-A- 4 421 652
- US-B1- 6 187 162

## Description

The present invention relates to a method of manufacturing an electrodeionisation (EDI) apparatus, the apparatus itself, and its use for purifying water.

The treatment of water is a process which occurs from a small scale, such as laboratory scale, up to large industrial plants. Water treatment is generally the improvement of the quality of the water in some way, usually by the removal of one or more 'imparities' to below a certain level. Different water treatments generally involve a reduction and/or removal of different impurities to different levels.

Water treatment apparatus includes any apparatus designed to in some way treat water, particularly but not exclusively to purify water, usually by the extraction and/or exchange of one or more substances in the water. Such substances may or may not be deemed impurities, and their removal and/or exchange may or may not improve the quality of the water with regard to known water treatment or purification processes.

In the field of water purification for such applications as pharmaceutical, medical, laboratory, manufacturing and others, a number of process are usually used in series to form a system. Of these processes, at least one is usually a form of deionisation, such as ion exchange, reverse osmosis, electrodeionisation or distillation. The selection of the actual processes used in any water purification system will be based on performance of the particular unit operations and on cost, both capital and running. Ion exchange, using for example resins, is very widely used for this purpose.

Ion exchange materials, usually in the form of spherical resin beads, are used in water purification to remove the ions in the feedwater replacing them with ions from the resin. Resins are supplied in a moist form and are advised to be kept moist. Typically, the water content of moist beads is 40-70 wt%. An example manufacturer of resin beads is The Dow Chemical Company who sell the DOWEX range of ion exchange resins. Their 'Guaranteed Sales Specifications' indicate water content ranges for their DOWEX products between 40-70 (or above) wt% for both gel and macroporous type resins. In general, cationic resins remove cations such as sodium and calcium ions and replace them with hydrogen ions. Anionic resins remove anions such as chloride and sulphate ions, and replace them with hydroxyl ions. Inert resins are also available.

After time, the ions on the resin have to be replaced at intervals with hydrogen or hydroxyl ions, a process known as regeneration. Alternatively the resins are replaced. As will be known to users of ion exchange resins, they increase or decrease their size with a change of ionic form such that a bed of resin in the sodium form will typically swell approximately 8% when it is regenerated from sodium form into the hydrogen form and a bed of anion resin will typically swell about 20% when regenerated from chloride form to hydroxide form.

Resin beds may be of a single resin type or form or an admixture of types or forms. Ion exchange resins may be used on their own, or with carbon for the removal of organic contaminants from water.

For laboratory purifiers, ion exchange resins are placed into disposable cartridges as shown in US5919357 or EP1470849. The resins are placed into the cartridge in the moist form as supplied by the resin manufacturer. As typical water content is 40-70 wt%, the water associated with the resin can be a significant weight of the cartridge or cylinder and so increase the cost and difficulty of handling. Larger, industrial, ion exchange cylinders are filled in a similar manner but may also be slurry filled.

Electrodeionisation is a process known in the art as shown in EP0078442, EP0170895, EP0570341 and EP0762927. It involves the placing of ion exchange material, most commonly ion exchange resin, within a cell or chamber of distinct volume formed of solid material walls, e.g. plastic, and of ion exchange membranes. Several of these chambers are typically built into a unit, module or stack with electrodes at each end. An electrical potential (voltage) is placed across the electrodeionisation stack of chambers which encourages a current to pass through it. At the same time a feedwater is allowed to enter some or all of the chambers and any ions that are removed from the water by the resin are moved through or across the ion exchange resin to the ion exchange membrane, through which they pass out of the exchange chamber(s) into a waste chamber(s) and then out of the unit. In this manner a succession of ions can be removed from the cell via the ion exchange material and ions will be removed from the water being passed through the chambers, resulting in a deionised product water output. An alternative design of electrodeionisation has a spiral or circular form between fixed located central and outer electrodes. Electrodeionisation stacks are generally constructed by placing the resin directly into the chamber, where it is to work, while the stack is being assembled. It is common to use the expansion of the resin beads to obtain optimal performance by filling the stack with resin in for example the sodium and chloride forms, and regenerating them before use. This results in the beads expanding within the stack and pressing against each other. In this way, the contact between the beads is improved and the area of contact between any two beads is increased. This results in a decrease in the electrical resistance of the electrodeionisation stack which allows a lower voltage to be used with any particular electrical current. This regeneration may involve chemical flow but is usually carried out by passing a current through the stack in a procedure which can result in a delay of several hours or more before the stack is ready for use.

The resin expansion during regeneration will reduce the void fraction within the chamber, restricting the flow of water passing through it and increasing the pressure drop. One finding of stacks constructed in this manner is that the pressure drop of the water flowing through the stack may be different in each of the anionic and cationic resin beds. This is due to the different sizes and expansions of the beads used.

US5066375 show filling resins into a stack, post-stack assembly, using a slurry technique. However, the desire for optimal and consistent performance can make this method less attractive as it is difficult to fully and consistently pack the resin into the space.

According to one aspect of the present invention, there is provided a method of manufacturing an electrodeionisation (EDI) apparatus comprising a plurality of chambers comprising the step of:
filling at least one chamber with ion exchange resin;
wherein at least one ion exchange resin is dry having a water content of 0-20 wt%.

It has been found that ion exchange resin which is dry is smaller in volume than moist ion exchange resin, possibly smaller by 25-50%. As this reduction in volume is greater than the generally expected increase in size of ion exchange resins when regenerated, an advantage of the present invention is providing flexibility for the filling and occupation of a chamber of a water treatment apparatus with dry ion exchange resin.

Ion exchange resins can be provided as different types such as macroporous resins or gels. Gel-types resins are preferably used in the present invention.

The term "dry" includes ion exchange resin which is provided in dry form, or an ion exchange resin which may be provided in a moist or wetted form, and which is subsequently dried. Thus, a dry ion exchange resin of the present invention has a water content of 0-20 wt% or 0-15 wt%, and more preferably 0-10 wt%.

There are many forms of drying a moist or wetted material known in the art, generally involving the use of temperature and/or pressure. These include, for example, the use of ovens including humidity controlled ovens, microwaves, hot or cold air or gas flows, vacuums and/or infra-red irradiation. One common form of drying is to locate the material in a suitable vessel or chamber, such as an oven, with an increase in the ambient temperature therearound. Another common method is to decrease the pressure around the material. Some form of agitation or disturbance of the material during drying is also known to increase the rate of drying or effectiveness of the drying. A partial re-wetting in standardised conditions, of, for example, humidity, prior to use, may also occur.

An example of drying is a warmed temperature of 25-60°C and/or a warm dry air stream, optionally with disturbance of the ion exchange resin such as in a fluidised bed.

The term "ion exchange resin" extends to any form or type of ion exchange resin, including those which are anionic, cationic, or both. Ion exchange resins are well known in the art, and may be provided in a "regenerated" hydrogen/hydroxyl form, or in a "non-regenerated" ionic form (involving ions such as sodium and chloride as mentioned above), which requires regeneration before use. Resins can be supplied in any form, such as beads, powder, rods or the like.

Thus, the present invention extends to the use of regenerated ion exchange resins, or the use of non-regenerated resins which require to be regenerated prior to use, or to the use of resins for the present invention in a non-regenerated form.

An electrodeionisation apparatus of or useable with the present invention may involve one or more of chambers or compartments, one or more of which may be partly, substantially, essentially or wholly filled with a dry ion exchange resin, optionally being the same or different dry ion exchange resins in each of two or more such chambers.

In one embodiment of the present invention, the method comprises the electrodeionisation (EDI) apparatus comprising a number of chambers, and each chamber is at least partly, preferably wholly, filled with a dry ion exchange resin, more preferably involving two or more different dry ion exchange resins.

In the field of EDI apparatus, such apparatus generally has a number of chambers for exchanging anions and cations, usually juxtapositioned so that the anions and cations removed from the water being purified travel towards one or more 'concentrating' chambers, through which a desalting stream can optionally flow to remove the unwanted anions and cations. Located between the chambers are perm-selected membranes known in the art. Thus one or more chambers can be filled with the same or different anionic dry ion exchange resins, and one or more other chambers can be filled with the same or different cationic ion exchange resins.

The term "chamber" as used herein relates to any means which defines an enclosed space, and into which ion exchange resin can be located (including those being spiral or circular in form), and preferably maintained during the water treatment process. The term chamber includes the term cell, and water treatment apparatus, units or devices having a plurality of cells and chambers are known in the art. The term chamber also includes an area within other apparatus, devices or units, such as cartridges or cylinders, which are useable in or as part of a larger electrodeionisation apparatus, unit or device.

In one embodiment of the present invention, at least one chamber is filled with dry ion exchange resin beads whose volume once wetted is equal to or greater than the volume occupied by the same amount of conventional moist or wetted ion exchange resin hitherto added into a chamber. This can be achieved by using the same physical amount, for example weight or number of beads, of dry ion exchange resin as amount of moist or wet resin previously used in the same chamber. As the dry ion exchange resin is wetted, or otherwise made moist, it will expand and occupy a volume that is at least approximately equal to, or greater than, the volume hitherto used. The physical amount of dry ion exchange resin may also be a greater or lesser amount than the moist or wet ion exchange resin amount, so long as the wetted volume is the same or greater than the volume of the moist or wet resin hitherto used in the same position or location of the electrodeionisation apparatus.

Another advantage of the present invention is that the filling of a chamber can be more easily performed using a dry ion exchange resin. Preferably the filling is a free-flowing procedure; the dry resin preferably being a free-flowing material. The use of a dry material allows the filling operation to be cleaner and provides greater ease of handling and filling than with a wet material which can be more difficult, for example more difficult to clean up if spilt.

Another advantage is to obtain a standard and consistent 'dryness' in terms of form, volume, weight, etc, compared to moist or wet resin. Moist or wet resins have known variations that can be experienced either within or between stocked or stocks of moist or wet resin, such as the bags of wet resin currently made and sold. Accurate, and repeatably accurate, filling of a location, such as a cell or a chamber, with resin now becomes possible once a standard dryness is obtained. That is, once the dryness criterion of an ion exchange resin is defined and repeatedly used, a user can now have significantly greater assurance of the amount (usually based on weight or volume) of ion exchange resin required in a location. Over-filling/stocking or under-filling/stocking can be avoided, allowing the user greater assurance of the expected performance of the resin for the purification desired.

Thus, the present invention extends to a method of manufacture wherein at least one dry ion exchange resin is added to an electrodeionisation apparatus after part, substantial or whole assembly of the apparatus in its usable form. One example is the creation of a 'stack' for an EDI apparatus, which generally involves the location of a number or plurality of chambers together to form the stack, at least some chambers of which then require the location of an ion exchange resin therein.

Preferably, the or each chamber includes a port for the filing of dry ion exchange resin thereinto, usually after forming of the chamber.

According to a second aspect of the present invention, there is provided an electrodeionisation (EDI) apparatus having one or more chambers, at least one chamber including dry ion exchange resin having a water content of 0-20 wt%.

In one embodiment, such apparatus includes a number of chambers, optionally forming a 'stack'.

In a third aspect of the present invention, there is provided a method of purifying water comprising passing the water through an electrodeionisation (EDI) apparatus as hereinbefore defined, or an EDI apparatus whenever obtained by a method of manufacture as hereinbefore defined.

In one embodiment of the invention, resin in the same form and state as would hitherto be used, for example moist or wetted resin, is dry or dried and a measured amount that is correspondant to that hitherto used, for example in terms of number of beads, is filled into a water treatment chamber, cartridge or stack, etc. during construction. Once assembled the resin is wetted and, in the case of an electrodeionisation stack, is regenerated as would be the case with un-dried resin.

In a second embodiment of the invention, regenerated resin, i.e. in a hydrogen and/or hydroxide form, is used in place of the non-regenerated resin, i.e. in a non hydrogen and/or non hydroxide form, in the stack filling process. This allows the unit to be used directly for deionisation as soon as the stack has been constructed and the resin wetted to expand it.

In a third embodiment of the invention, either non-regenerated or regenerated resin is placed into a chamber such that the final or expanded volume of resin, e.g. the number of beads, located in the chamber is greater than would be the case with a hitherto, un-dried resin. This has the advantage that when the resin is re-wetted and in operation, the electrical resistance of the chamber is lower, and hence power usage for the same deionisation is lower.

Alternatively more water can be deionised for the same power input in the case of an EDI apparatus, or the same pack volume in the case for a cartridge. The limit of this overfilling is related to the new expansion, the mechanical strength of the resins, chambers and other components, and/or the increase in pressure drop of the water passing through the water treatment apparatus.

In a fourth embodiment of the present invention, an electrodeionisation cartridge or stack is constructed with ports for filling the resin once the stack has been assembled. The dried resin is poured, sucked or blown into the stack. A measured amount can be filled, which due to the shrinkage of the resin, need not fill all of the internal space of the chamber. The same or greater volume of resin, e.g. number of beads, can be added such that the level of fill that can be achieved is the same or greater than a cartridge or stack built using resin-filling during the cartridge or stack assembly.

In a further embodiment a stack can be constructed in which the water pressure drops through each chamber or bed can be optimised so that the overall pressure drop within the stack is minimised.

An embodiment of the present invention will now be described by way of example only, and with reference to the accompanying schematic drawings in which:
Figure 1 is a schematic cross-sectional side view of an EDI apparatus according to one embodiment of the present invention;
Figure 2 is a schematic perspective view of a chamber for use in the apparatus of Figure 1; and - Figure 3 is cross sectional view along line XX of Figure 2.

Referring to the drawings, an electrodeionisation unit is shown having various chambers (24, 26, 28, 36, 46) separated by ion exchange membranes (32, 34, 42, 44) and bounded by electrodes (14, 16). Into these chambers ion exchange resin (25, 27, 29, 37, 47) is added to assist in the de-ionising process by methods known in the art. An example of this form of stack is shown in more detail in WO99/39810.

A feed solution (50) to be deionised is fed into the electrodeionisation unit and passed through the desalting beds (36, 46) and out of the electrodeionisation unit as a deionised product (60). Electrode and concentrate chambers (24, 26, 28) are flushed with streams (52, 54, 56) to elute the waste ions and electrode gases.

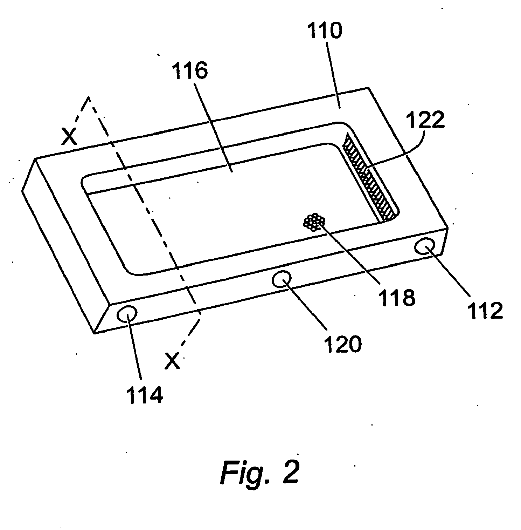

Figure 2 shows an individual plate (110) used in the construction of an electrodeionisation unit and which will form a chamber. The plate (110) is constructed of rigid plastic and has a cut out portion (116) into which ion exchange resin (118) is added to enable the electrodeionisation process. Ports (112, 114) are included for the water to be deionised to enter and exit the plate (110). Distributors (122) at the ends of the plate (110) keep the resin in place within the cut out portion (116). A fill hole (120) is included to allow for resin filling post-assembly.

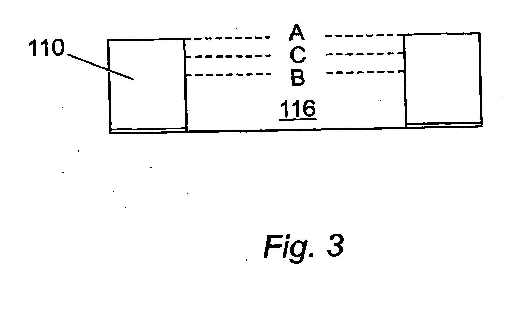

Figure 3 shows a cross-section along line XX of the plate (110) in figure 2. When a unit of the prior art is constructed, each plate is filled with moist or wetted ion exchange resin to level A. The present invention allows for the plate (110) to be filled only to level B in order to obtain the same final wetted volume, and so the same performance.

The present invention further allows for the dry resin to be filled to a higher level, for example level C shown In Figure 3, to obtain an electrodeionisation unit with improved electrical properties.

Levels B & C in Figure 3 are figurative only, and depend on the properties of the particular resin involved, and, for level C, the desired properties of the final unit

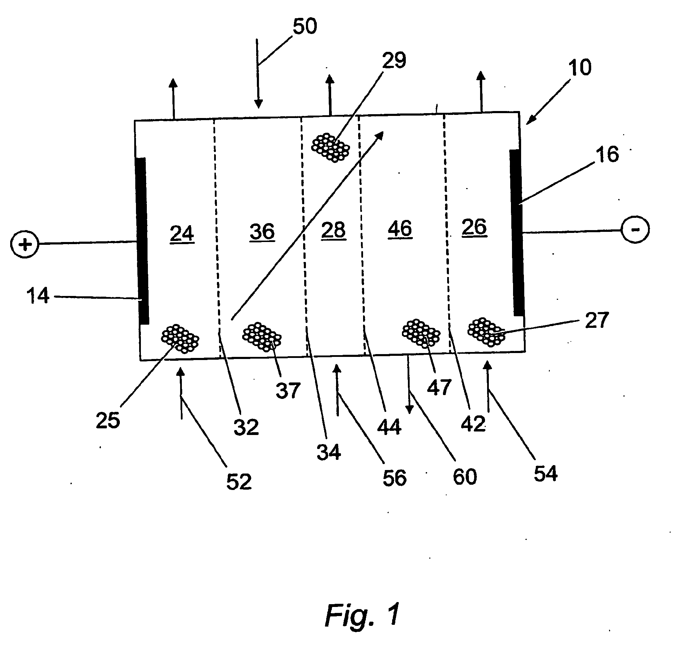

The ion exchange resin that can be used in the unit manufacture of a water treatment apparatus such as the EDI unit in Figure 1 is preferably dried prior to use. This may be by thermal means, e.g. an oven at 25-60°C, preferably 30-40°C, by the action of flowing, preferably dry, preferably heated, air over or through the resin or any other method as known in the art. This results in a shrinkage of the resin. The resin may be added in turn as the unit is assembled or the resin may be fed via a hole (120) in the plate after the unit has been assembled. This may be gravity feed, suction or blown. This addition may take place just after assembly or much closer to the time of use. Prior to use, water is added to the unit and the resins allowed to expand.

Thus, the present invention provides the further advantage of dry storage of an electrodeionisation apparatus. That is, apparatus can be assembled with dry ion exchange resin, and maintained in that form until required for use. This may be for cartridges, or be for EDI stacks, especially when constructed with dry ion exchange membranes, for example, as supplied by Sybron Chemicals Inc, USA or Mega a.s., Cz. Wet storage leads to problems with bacterial growth and/or organic leaching and a proportion of the overall weight will be the water which can increase difficulty in handling and increase transportation costs.

### Examples

### Example 1

Dowex Marathon 11 chloride form anionic resin beads and Dowex Marathon C sodium form cationic resin beads were dried in an oven at 35°C.

The Product Information from The Dow Chemical Company states that the water content of their Dowex Marathon 11 exchange resin in its Cl- form is 48-58%, and for the Dowex Marathon C exchange resin in its Na+ form, it is 42-48%, and for the H+ form 50-56%.

By way of one further example from the approximately 50 Dowex ion exchange resins currently detailed on The Dow Chemical Company website, the water content of the Dowex Marathon A exchange resin in its Cl- form is 50-60%, and in its OH- form, 60-72%, confirming the general water content of commercially available ion exchange resins to be in the range 40-70 wt%.

Thus, for example, 715g of the Marathon 11 resin will have a water content between 343-418g (due to variability of water content between batches of resin).

There was little change in the demeanour of the beads (apart from being dry) when dried. Before drying, such beads can have a diameter of typically 0.3-0.7mm depending on their type, with some types having a wider range than others, and the diameter only decreased by up to 20% on drying. As a typical example, approx 1 litre of the anionic resin was weighed at 715g, and then dried. It then weighed 372g and occupied approx 520ml.

Thus, the Marathon 11 resin lost 343g of water during the drying process. This equates to a residual water content of between 0-18% in the dry resin.

Upon re-wetting the anionic resin, the resin expanded to approx 960ml. The resin did not therefore change its density significantly on drying.

### Example 2

Different batches of the Dowex resins used in Example 1 were dried in a static oven at a temperature of 35°C. Portions of the dried resins were then re-wetted, and then expanded by 76 and 44 % respectively. Two stacks as shown in figure 1 were constructed, the first by the traditional method of filling the stack with non-dried resin, the second with the dried resins prepared above. The amount of dried resin was calculated by taking the void volume of the plates and reducing it by the volume of the expansion found during the re-wetting test.

The stacks were tested, with a mutual feed of water pre-treated by reverse osmosis to a conductivity of 8 microS/cm. The stacks were operated for 11 days and steady results obtained.

| | Dried resin filled stack | Non-dried resin stack |
|---|---|---|
| Product flow | 0.39 Ipm | 0.39 Ipm |
| Pressure drop | 2.0 bar | 1.5 bar |
| Stack voltage | 13.9 volts | 17.3 volts |
| Stack current | 2.0 amps | 2.0 amps |
| Product conductivity | 0.40 microS/cm | 0.53microS/cm |

As can be seen, the power input has been reduced by nearly a quarter, whilst the product conductivity has improved significantly. Thus, less power is required to effect an improved treatment of water.

### Example 3

Another Dowex Marathon C hydrogen form cation resin was dried in a fluid bed drier by passing a flow of air at 45°C through it until dried. A sample of the resin was re-wetted and found to expand 92%. Another Dowex Marathon 11 chloride form anion resin was similarly dried in the fluid bed drier at 45°C and the sample was found to expand 83%.

A stack as shown in figure 1 was constructed with the filling carried out by weight. The error between added weight and target weight was less than 1% for each chamber indicating the high level of accuracy attainable.

A second stack was constructed using the traditional wet filling method using Marathon C sodium and Marathon A chloride resins.

The two stacks were placed In parallel onto the same feed water of 15.7 microS/cm at, nominally, the same flow, and operated until steady conditions were obtained.

| | Dried resin filled stack | Non-dried resin stack |
|---|---|---|
| Product flow | 1.00 Ipm | 0.98 Ipm |
| Pressure drop | 0.9 bar | 0.6 bar |
| Stack voltage | 16.6 volts | 19.2 volts |
| Stack current | 3.8 amps | 4.3 amps |
| Product conductivity | 0.068 microS/cm | 0.085 microS/cm |

As can be seen, the product conductivity has again improved with less electrical power input

As known to the person skilled in art, there are operations, processes and parameters that can be adapted in creating an electrodeionisation apparatus. The present invention provides flexibility to the user to create electrodeionisation apparatus to achieve parameters desired. Thus, in Example 2 for example, the pressure drop was in fact higher in the stack built with dried resin, and the voltage was lower, for the same current. Both these features indicate an overfill of resin in the stack compared to the normal construction manner.

In some circumstances, a higher pressure drop is not undesired if it leads to a reduction in voltage and/or an improvement in product conductivity as shown in Example 2. In other cases, it may not be desired to improve the product conductivity, such that product conductivity can be maintained whilst there is reduction in voltage or applied power. Different pressure-related effects can be obtained in different chambers within the same electrodeionisation apparatus.

The present invention provides an easier method of filling a chamber compared with the use of wetted or moist resins, as well as providing an ability to over fill' a chamber or cell of an electrodeionisation water treatment apparatus, in order to achieve results desired, and a greater flexibility of performance parameters.

## Claims

1. A method of manufacturing an electrodeionisation (EDI) apparatus comprising a plurality of chambers (24, 26, 28, 36, 46) to form a stack, comprising the step of:
filling at least one chamber with ion exchange resin (25, 27, 29, 37, 47);
wherein at least one ion exchange resin is dry having a water content of 0-20 wt%.

2. A method as claimed in Claim 1 wherein the or each dry ion exchange resin has a water content of 0-10 wt%.

3. A method as claimed in Claim 1 or Claim 2 wherein one or more of the ion exchange resins is provided in a moist or wetted form and subsequently dried prior to filling in the chamber.

4. A method as claimed in Claim 3 wherein the drying involves a warmed temperature of 25-60°C and a warm dry air stream.

5. A method as claimed in any one of the preceding claims wherein the ion exchange resin or resins are either anionic or cationic or both.

6. A method as claimed in any one of the preceding claims wherein the ion exchange resin(s) are in the form of beads.

7. A method as claimed in any one of the preceding claims wherein the electrodeionisation (EDI) apparatus comprises a number of chambers, and each chamber is at least partly filled with dry ion exchange resin.

8. A method as claimed in claim 7 wherein one or more chambers are filled with the same or different anionic dry ion exchange resins and one or more chambers are filled with the same or different cationic dry ion exchange resins.

9. A method as claimed in any one of the preceding claims wherein the volume of the or each dry ion exchange resin is 25-50 vol% less than the volume of the same ion exchange resin in a moist or wetted form.

10. A method as claimed in any one of the preceding claims wherein the amount of a dry ion exchange resin filled into a chamber is such that the subsequent moist or wetted volume of such resin in the chamber is greater than the volume occupied by filling the chamber with moist or wetted resin.

11. A method as claimed in any one of the preceding claims wherein the or each dry ion exchange resin is wetted prior to use.

12. A method as claimed in any one of the preceding claims wherein one or more of the dry resins are regenerated ion exchange resins.

13. A method as claimed in any one of claims 1-11 wherein one or more of the dry resins are non-regenerated ion exchange resins.

14. A method as claimed in any one of the preceding claims wherein the or each chamber comprises a port for filling the dry ion exchange resin once the chamber has been formed.

15. An electrodeionisation (EDI) apparatus having one or more chambers, at least one chamber including dry ion exchange resin having a water content of 0-20 wt%.

16. A method of purifying water comprising passing the water through an electrodeionisation (EDI) apparatus as claimed in claim 15 or an EDI apparatus whenever obtained by a method of manufacture as claimed in any one of claims 1-14.

## Patentansprüche

1. Ein Verfahren zur Herstellung einer Elektroentionisierungsvorrichtung (EDI-Vorrichtung), die eine Vielzahl von Kammern (24, 26, 28, 36, 46) beinhaltet, um einen Stapel zu bilden, das den folgenden Schritt beinhaltet:
Füllen von mindestens einer Kammer mit Ionenaustauschharz (25, 27, 29, 37, 47),
wobei mindestens ein Ionenaustauschharz trocken mit einem Wassergehalt von 0-20 Gew.-% ist.

2. Verfahren gemäß Anspruch 1, wobei das oder jedes trockene Ionenaustauschharz einen Wassergehalt von 0-10 Gew.-% aufweist.

3. Verfahren gemäß Anspruch 1 oder Anspruch 2, wobei eines oder mehrere der Ionenaustauschharze in einer feuchten oder benetzten Form bereitgestellt wird und anschließend vor dem Füllen in die Kammer getrocknet wird.

4. Verfahren gemäß Anspruch 3, wobei das Trocknen eine gewärmte Temperatur von 25-60°C und einen warmen trockenen Luftstrom einschließt.

5. Verfahren gemäß einem der vorhergehenden Ansprüche, wobei das Ionenaustauschharz oder die Ionenaustauschharze entweder anionisch oder kationisch oder beides sind.

6. Verfahren gemäß einem der vorhergehenden Ansprüche, wobei das Ionenaustauschharz/die Ionenaustauschharze in der Form von Kügelchen vorliegt/vorliegen.

7. Verfahren gemäß einem der vorhergehenden Ansprüche, wobei die Elektroentionisierungsvorrichtung (EDI-Vorrichtung) eine Anzahl von Kammern beinhaltet und jede Kammer zumindest teilweise mit trockenem Ionenaustalischharz gefüllt ist.

8. Verfahren gemäß Anspruch 7, wobei eine oder mehrere Kammern mit den gleichen oder unterschiedlichen anionischen trocknen Ionenaustauschharzen gefüllt sind und eine oder mehrere Kammern mit den gleichen oder unterschiedlichen kationischen trockenen Ionenalistauschharzen gefüllt sind.

9. Verfahren gemäß einem der vorhergehenden Ansprüche, wobei das Volumen des oder jedes trockenen Ionenaustauschharzes um 25-50 Vol.-% geringer als das Volumen des gleichen Ionenaustauschharzes in einer feuchten oder benetzten Form ist.

10. Verfahren gemäß einem der vorhergehenden Ansprüche, wobei die Menge eines in eine Kammer gefüllten trockenen Ionenaustauschharzes derart ist, dass das spätere feuchte oder benetzte Volumen eines solchen Harzes in der Kammer größer als das Volumen ist, das durch das Füllen der Kammer mit feuchtem oder benetztem Harz eingenommen wird.

11. Verfahren gemäß einem der vorhergehenden Ansprüche, wobei das oder jedes trockene Ionenaustauschharz vor der Verwendung benetzt wird.

12. Verfahren gemäß einem der vorhergehenden Ansprüche, wobei eines oder mehrere der trockenen Harze regenerierte Ionenaustauschharze sind.

13. Verfahren gemäß einem der Ansprüche 1-11, wobei eines oder mehrere der trockenen Harze nicht regenerierte Ionenaustauschharze sind.

14. Verfahren gemäß einem der vorhergehenden Ansprüche, wobei die oder jede Kammer eine Öffnung beinhaltet, um das trockene Ionenaustauschharz zu füllen, sobald die Kammer gebildet worden ist.

15. Eine Elektroentionisierungsvorrichtung (EDI-Vorrichtung), die eine oder mehrere Kammern aufweist, wobei mindestens eine Kammer trockenes Ionenaustauschharz umfasst, das einen Wassergehalt von 0-20 Gew.-% aufweist.

16. Ein Verfahren zum Reinigen von Wasser, das das Führen des Wassers durch eine Elektroentionisierungsvorrichtung (EDI-Vorrichtung) gemäß Anspruch 15 oder eine EDI-Vorrichtung, wann immer sie durch ein Herstellungsverfahren gemäß einem der Ansprüche 1-14 erhalten wurde, beinhaltet.

## Revendications

1. Une méthode de fabrication d'un appareil d'électrodésionisation (EDI) comprenant une pluralité de chambres (24, 26, 28, 36, 46) pour former un empilement, comprenant l'étape consistant à :
remplir au moins une chambre avec de la résine échangeuse d'ions (25, 27, 29, 37, 47) ; dans laquelle au moins une résine échangeuse d'ions est sèche avec une teneur en eau de 0 à 20 % en poids.

2. Une méthode telle que revendiquée dans la revendication 1 dans laquelle la ou chaque résine échangeuse d'ions sèche a une teneur en eau de 0 à 10 % en poids.

3. Une méthode telle que revendiquée dans la revendication 1 ou la revendication 2 dans laquelle une ou plusieurs des résines échangeuses d'ions sont prévues sous une forme humide ou mouillée et séchées par la suite avant d'en remplir la chambre.

4. Une méthode telle que revendiquée dans la revendication 3 dans laquelle le séchage implique une température réchauffée de 25 à 60 °C et un flux d'air sec chaud.

5. Une méthode telle que revendiquée dans l'une quelconque des revendications précédentes dans laquelle la résine ou les résines échangeuses d'ions sont soit anioniques, soit cationiques, soit les deux.

6. Une méthode telle que revendiquée dans l'une quelconque des revendications précédentes dans laquelle la(les) résine(s) échangeuse(s) d'ions sont sous la forme de perles.

7. Une méthode telle que revendiquée dans l'une quelconque des revendications précédentes dans laquelle l'appareil d'électrodésionisation (EDI) comprend un certain nombre de chambres, et chaque chambre est au moins en partie remplie avec de la résine échangeuse d'ions sèche.

8. Une méthode telle que revendiquée dans la revendication 7 dans laquelle une ou plusieurs chambres sont remplies avec les mêmes résines ou des résines échangeuses d'ions sèches anioniques différentes et une ou plusieurs chambres sont remplies avec les mêmes résines ou des résines échangeuses d'ions sèches cationiques différentes.

9. Une méthode telle que revendiquée dans l'une quelconque des revendications précédentes dans laquelle le volume de la ou de chaque résine échangeuse d'ions sèche est de 25 à 50 % en volume inférieur au volume de la même résine échangeuse d'ions sous une forme humide ou mouillée.

10. Une méthode telle que revendiquée dans l'une quelconque des revendications précédentes dans laquelle la quantité d'une résine échangeuse d'ions sèche avec laquelle une chambre est remplie est telle que le volume humide ou mouillé ultérieur d'une telle résine dans la chambre est supérieur au volume occupé par de la résine humide ou mouillée remplissant la chambre.

11. Une méthode telle que revendiquée dans l'une quelconque des revendications précédentes dans laquelle la ou chaque résine échangeuse d'ions sèche est mouillée avant d'être utilisée.

12. Une méthode telle que revendiquée dans l'une quelconque des revendications précédentes dans laquelle une ou plusieurs des résines sèches sont des résines échangeuses d'ions régénérées.

13. Une méthode telle que revendiquée dans l'une quelconque des revendications 1 à 11 dans laquelle une ou plusieurs des résines sèches sont des résines échangeuses d'ions non régénérées.

14. Une méthode telle que revendiquée dans l'une quelconque des revendications précédentes dans laquelle la ou chaque chambre comprend un orifice pour remplir la chambre une fois qu'elle a été formée avec la résine échangeuse d'ions sèche.

15. Un appareil d'électrodésionisation (EDI) ayant une ou plusieurs chambres, au moins une chambre incluant de la résine échangeuse d'ions sèche ayant une teneur en eau de 0 à 20 % en poids.

16. Une méthode de purification d'eau comprenant faire passer l'eau à travers un appareil d'électrodésionisation (EDI) tel que revendiqué dans la revendication 15 ou un appareil EDI lorsqu'il est obtenu par une méthode de fabrication telle que revendiquée dans l'une quelconque des revendications 1 à 14.
